# EUROPEAN PATENT SPECIFICATION

(11) **EP 3 182 638 B1**
(45) Date of publication and mention of the grant of the patent: **25.12.2019**
(21) Application number: 15020253.9
(22) Date of filing: 18.12.2015
(51) Int. Cl.: H04L 9/08, G06F 7/58

(54) **APPARATUS AND METHOD FOR ADDING AN ENTROPY SOURCE TO QUANTUM KEY DISTRIBUTION SYSTEMS**
VORRICHTUNG UND VERFAHREN ZUM HINZUFÜGEN EINER ENTROPIEQUELLE ZU QUANTEN-SCHLÜSSELVERTEILUNGSSYSTEMEN
APPAREIL ET PROCÉDÉ PERMETTANT D'AJOUTER UNE SOURCE D'ENTROPIE POUR SYSTÈMES DE DISTRIBUTION DE CLÉ QUANTIQUE

(43) Date of publication of application: 21.06.2017
(73) Proprietor: ID Quantique S.A., 1227 Carouge (CH)
(72) Inventor: Legré, Matthieu, 1202 Genève (CH)
(74) Representative: KATZAROV S.A.

(56) References cited:
- EP-A2- 1 780 934
- GB-A- 2 390 271
- US-A- 5 953 421
- US-A1- 2005 259 825
- US-A1- 2013 315 395
- US-A1- 2015 058 841

## Description

### TECHNICAL FIELD

This invention relates generally to the field of quantum cryptography, and more particularly to a method for enhancing security of Quantum Key Distribution systems by providing the possibility to add an external source of entropy.

### BACKGROUND & PRIOR ART

The primary goal of Quantum Cryptography or Quantum Key Distribution (QKD) is to be able to share between an emitter and a receiver a sequence of bits whose privacy can be proven with a limited set of assumptions.

The general principles of quantum cryptography were first set forth by Bennett and Brassard in their article "Quantum Cryptography: Public key distribution and coin tossing," Proceedings of the International Conference on Computers, Systems and Signal Processing, Bangalore, India, 1984, pp. 175-179 (IEEE, New York, 1984). QKD (quantum key distribution) involves establishing a key between a sender ("Alice") and a receiver ("Bob") by using quantum states carried by either single-photons or weak (e.g., 0.1 photon on average) optical signals (pulses). Those quantum states are called "qubits" or "quantum signals", and are transmitted over a "quantum channel". These states of the generated "qubits" and the basis used for their analysis are randomly chosen. Unlike classical cryptography whose security depends on computational impracticality, the security of quantum cryptography is based on the quantum mechanics principle that measurements of a quantum system will modify its state. Consequently, an eavesdropper ("Eve") that attempts to intercept or otherwise measure the exchanged qubits introduces errors in this list of exchanged qubits that reveal her presence.

Specific QKD systems are described in U.S. Pat. No. 5,307,410 to Bennett (which patent is incorporated herein by reference), and in the article by C. H. Bennett entitled "Quantum Cryptography Using Any Two Non-Orthogonal States", Phys. Rev. Lett. 68 3121 (1992). A survey of the bases and methods as well as the historical development of quantum cryptography is contained in the articles by N. Gisin, G. Ribordy, W. Tittel and H. Zbinden, "Quantum Cryptography", Reviews of Modern Physics. 74, 145 (2002). Therefore, QKD is well-known as a technology that allows two parties to exchange secret keys in a secured manner and which security principle can be proven from the point of view of Information Theory. In a QKD implementation, the emitter and the receiver are linked by a Quantum Channel (QC), which is a channel over which the qubits are exchanged and a Service Channel (SC) used for all kinds of classical communications between the emitter and the receiver. Part of these classical communications consists in the post-processing of the sequence of qubits exchanged over the QC. This post-processing step is commonly called distillation of the raw key and results to the secret key.

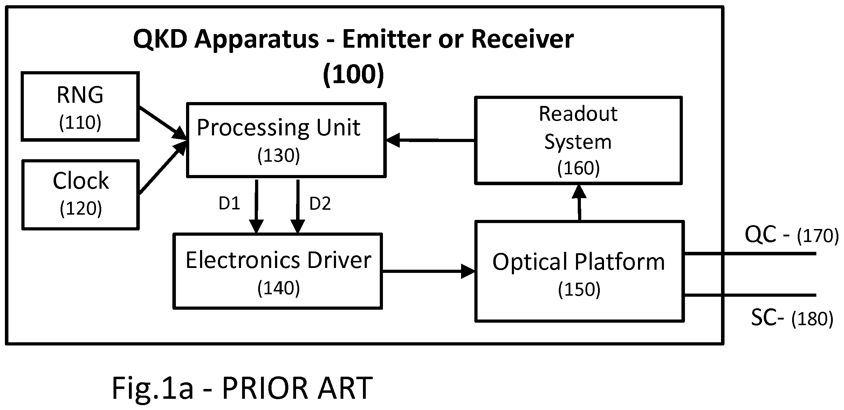

Description of QKD systems as described in the prior art may be described through Figla. Fig. 1a is a schematic diagram of a prior art communication system with QKD systems based on those disclosed in US 5,307,410 to Bennett and US 5,953,421 to Townsend, which patents are incorporated herein by reference. In this figure, the apparatus 100 that is shown can be the QKD emitter or the QKD receiver. A QKD apparatus 100 can be decomposed in at least six functional blocks which are a random number generator (RNG) 110, a clock 120, a processing unit 130, an electronic driver 140, an optical platform 150 and an electronics readout system 160. The RNG 110 is the source of entropy in the QKD apparatus. Entropy must be here understood as the random factor of its outputted signal. It is used to generate and provide random bits to the QKD system for all operations requiring random bit values. The RNG 110 can be implemented with any kind of random number generators, e.g. the commercial quantum random number generator QUANTIS [http://www.idquantique.com/random-number-generation/quantis-random-number-generator/], so it might generate and provide bits at a frequency that is different from the one of the QKD apparatus.

A QKD apparatus is a synchronous system that needs a well-defined reference clock to define its working frequency (e.g. frequency of generation/detection of the qubits). The clock 120 is used as reference clock of the apparatus 100. The clock 120 can be implemented with any kind of system generating a periodical digital signal, as e.g. electronic oscillators. The processing unit 130 performs all operations and processes on digital data that need to be reconfigurable or programmable. In particular, this includes the definition and generation of the delays between the digital signals driving the different optical or electrical components for the synchronization of all components in the apparatus 100, the distillation of the key, the classical communications between the emitter and the receiver, the monitoring of any signal in the apparatus 100 (e.g. monitoring of the temperature of some components). This processing unit 130 is connected to the RNG 110 and the clock 120. The RNG 110 sends a flow of random bits to the processing unit 130. The clock 120 sends a periodical digital signal to the processing unit 130. The digital signals sent by the RNG 110 and the clock 120 can be implemented as electronic digital signals propagating through copper wires that connect 110 to 130 and 120 to 130. The processing unit 130 can be implemented with a FPGA or a micro-processor. The electronic driver 140 is an electronic interface that transforms the logical signals generated by the processing unit 130 into analog signals that are able to drive the optical or electrical components of the optical platform. The electronic driver 140 is connected to the processing unit 130 and receives digital signals through this connection. This digital data can be split in two types. The first type (D1) of data is deterministic data that is the response of the processing unit to all data it receives except the random bits from the RNG 110. The second type of data (D2) is random data that is the response of the processing unit to the random bits from the RNG 110. The digital signals sent by the processing unit 130 can be implemented as electronic digital signals propagating through copper wires that connect 130 to 140. The electronic driver 140 can be implemented with any kind of electrical components that can convert digital signals into analog signals, such as digital to analog converters, pulse generators, delay generators set with a digital signal. The optical platform 150 is a platform with all optical components and the associated electrical components. This platform is used for the generation or detection of both optical signals: the qubits and the classical communications. The optical platform 150 is connected to the electronic driver 140, which sends the analog signals used to drive the components of the optical platform 150. The analog signals sent by the electronic driver 140 can be implemented as electronic analog signals propagating through copper wires that connect 140 to 150. The optical platform 150 is also connected to the quantum channel 170 and the service channel 180. Both channels can be made of optical fibers. The optical platform 150 can be made of active optical components (such as laser, avalanche photodiodes or phase modulators), passive optical components (such as beamsplitters, mirror or optical fibres), and electronic components needed for the proper working of the optical components (such as the thermocooler and thermistor for the laser or the photodiodes). The readout system 160 is an electronic interface that transforms the analog signals generated by the optical platform into digital signals that can be processed by the processing unit. The readout system 160 is connected to the optical platform 150 and the processing unit 130. The readout system 160 receives the analog signals generated by components of the optical platform 150. These analog signals can be implemented as electronic analog signals propagating through copper wires that connect 150 to 160. The analog signals are converted into digital signals and then sent to the processing unit 130. These digital signals can be implemented as electronic digital signals propagating through copper wires that connect 160 to 130. The readout system 160 can be made of any kind of electrical components able to convert an analog signal into a digital one, such as analog to digital converters, discriminators followed by digital pulse generators.

### • Security issues linked to the RNG of the QKD apparatus

One of the key components of QKD systems is the source of entropy namely the RNG 110. Indeed, the security of any QKD protocols is proven on the assumption that the entropy source used in the implementation shows high quality randomness from the point of view of information theory (i.e. with a Shannon entropy value of 1 for a digital entropy source). Therefore, entropy sources typically used for QKD are True Random Number Generators (T-RNG). There are solutions for high quality randomness generation based on physics. For example, a quantum phenomenon, as the choice of a single photon to be reflected by or transmitted through an optical beamsplitter, can be used to generate high quality random bit sequences. However, if the internal RNG of a QKD system fails then the whole QKD system security level is strongly impacted and might be reduced down to zero in extreme cases where the RNG output is constant. There are at least two reasons for a decrease of the entropy in an RNG:
- its internal entropy might fail due to aging device or components failure
- it might have been hacked.

### • Description of how the random bits are managed in the prior art

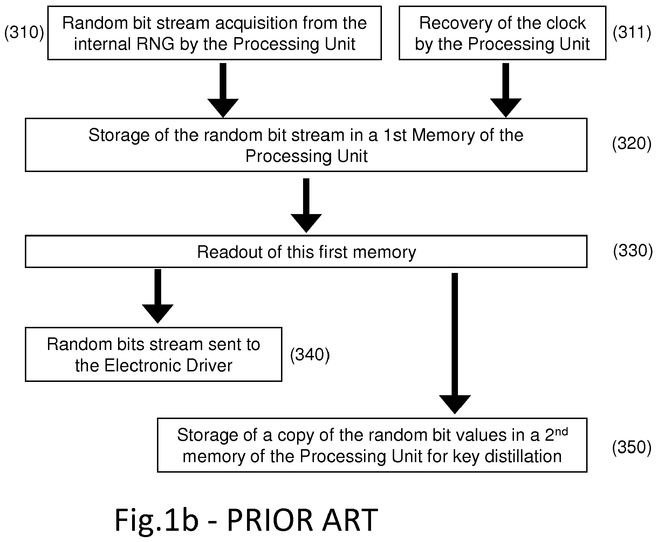

The method of management of the random bits in a QKD apparatus as it is performed in the prior art is illustrated by figure 1b. In the figure, the method describes the management of random bits in both QKD apparatus: the emitter and the receiver. The two first steps can be performed in parallel or sequentially in any order. One of those two first steps is the step 310, where the processing unit 130 acquires the random bit stream generated by the RNG 110. The second of those two steps is the step 311, where the processing unit recovers the clock frequency from the signal sent by the clock 120. In a second step 320, the random bits stream acquired by the processing unit 130 are stored in a first memory of this processing unit. In a third step 230, this first memory is read out and generates two data streams of the random bits. The combination of steps 310, 320 and 330 allows the QKD apparatus to work properly even if the RNG 110 and the processing unit 130 are not synchronized. Indeed, since the acquisition of the random bit stream is performed through the use of a buffer (or memory) in the processing unit 130, this buffer can be written at the speed of the RNG 110 and read at the speed of the working of the processing unit 130. In a fourth step 340, one data stream of random bits is sent to the driving electronics 140. This stream of random bits will be use by the electronic driver 140 either to randomly choose what qubit value will be generated or to randomly choose what is the basis that will be used for the qubit analysis. In parallel, in a fifth step 350, a copy of the random bit stream sent to the electronic driver 140 is stored in a second memory of the processing unit 130. These stored random bits will be used later on by the QKD apparatus for the key distillation.

This method shows that the randomness is generated at the beginning of the chain quite far from its use by the electronic driver 140. On the way of the random bits from the RNG 110 to the electronic driver 140, they are several components that might fail or be hacked and reduce the entropy used by the QKD apparatus significantly. One of the concerns of the QKD user is that if the internal RNG 110 fails, the QKD user can't notice it because the random bits are never sent out from the QKD apparatus. It is then obvious to any QKD user and/or provider to consider whether it is possible to increase the reliability or level of trust of the internal entropy source and its management in a QKD apparatus (RNG).

### • Ways to mitigate the potential failure or hack of the entropy source and its management

There are multiple approaches that might overcome an entropy failure. The mostly used one consists in mixing the outputs of at least two independent RNGs. One example of this approach is presented in US 7028059 By mixing, we consider any operations having at least two inputs and resulting in an output which values depends on all inputs. One example of mix of two digital inputs is logical operations such as AND, OR or XOR. The output of this mix can be seen as the result of a secondary RNG based on the at least two primary RNGs. This might increase the quality of randomness of the resulting secondary RNG and this ensures that if one of the primary entropy sources fail, the entropy of the secondary RNG is impacted in a limited manner. This entropy might not be impacted at all in certain cases where the mix is performed in an appropriate way (e.g. mixing two RNG sequences by performing an XOR logical operation between those two sequences or any other adapted cryptographic process). Therefore, the probability of failure of the secondary RNG is the product between the probabilities of failure of all primary RNGs. Hence, the probability of failure of the secondary RNG might be reduced to any given values if the number and the probability of failure of the primary RNGs (or entropy sources) are chosen properly. To reduce the probability of failure of the entropy source in a QKD apparatus, one could implement the RNG 100 as a secondary RNG composed of two or more primary RNGs or entropy sources.

This approach can guarantee the security of a QKD apparatus in the case of an eavesdropper hacking one or more primary RNGs of the QKD. Nevertheless, this can't guarantee the security of the QKD apparatus against a malicious supplier or the failure or hack of all primary entropy sources. A variation of the previous technique that might be considered is to allow the QKD user to plug an external entropy source to the QKD apparatus and use this external entropy source as a primary entropy source. In this case, the eavesdropper and the QKD supplier don't have access to one of the primary RNGs, so they can't reduce the entropy of the secondary RNG.

However, if we replace the RNG 110 by a secondary RNG based on at least one external entropy source (or external RNG), the flow of random bits of this secondary RNG is still sent to the processing unit 130. In this case, if the processing unit 130 is hacked or fails, the processing unit 130 can send to the electronic driver 140 a sequence of bit that is no longer random. For example, the processing unit 130 can be reconfigured in order to always send a bit value of zero to the electronic driver 140 whatever the value sent by the RNG 110 is. Therefore, the solution proposed in US7028059 is not sufficient to guarantee the QKD user that the flow of random bits used by the QKD apparatus is truly random.

Another option would be to associate an external entropy source. This type of solutions is disclosed in documents such as US2015/0058841 where a hypervisor (which may be considered as a processing unit) is used to emulate an external source of entropy. Again with this type of solution, it is not possible to guarantee to the QKD user that the flow of random bits used by the QKD apparatus is truly random.

To avoid this, one possible approach is to send directly the output of the secondary RNG to the electronic driver 140. In this case, the random bits don't go through the processing unit 130. So, they can't be changed by any reconfigurable or programmable components in the QKD. Nevertheless, one potential issue in this case is the synchronization of the output of the secondary RNG with the proper time of use of the random bits by the electronic driver 140. This task is normally performed by the processing unit. One way to avoid this issue is to share the clock signal with the at least two primary RNGs (the internal and the at least one external ones). This means that the QKD supplier needs to provide the user with a way to get access to the clock. This is a quite complicated solution that is not considered.

### • Technical issues:

QKD users don't have access to bit values generated by the internal QKD system RNG, nor to the bit values used to generate or analyze qubits. Actually, QKD users must trust their provider and its whole supplier chain regarding the proper working of the RNGs embedded in the QKD apparatus. When a QKD apparatus is under test, customers may easily check the randomness quality of embedded RNG outputs. Customers may moreover check that the QKD apparatus works for each possible bit values properly. However, when the QKD apparatus is closed because it is under use, the customers are not able to check whether the RNG is still providing high quality entropy or not. One can give the customer the opportunity to mix his/her own external entropy source with the internal RNG by sending the result of this mix to the processing unit, but in this case the provider is unable to guarantee the randomness of the bit values used to generate or analyze the qubits because the reconfigurable and reprogrammable processing unit can be hacked. Therefore, one can send the output of the secondary RNG directly to the electronic driver, but in this case the random outputs need to be synchronised with respect to the working of QKD apparatus.

That might be mitigated with a synchronization signal that is sent to the external RNG. The aim of this invention is to provide a QKD apparatus where one can introduce the output of an external RNG in the QKD apparatus in such a way that the entropy of the bits used for the generation and analysis of the qubits is at least as high as the entropy of the user RNG even in the case where the processing unit is hacked and without providing any clock signal to the QKD user.

Documents US 2013/315395A1, US 2005/259825 A1, GB 2 390271 A. US 5 953 421 (A), US 2015/058841 A1 and EP 1 780 934 A2 describe conventional KD apparatuses.

### Non-patent literature includes:

- C. H. Bennett and G. Brassard. "Quantum cryptography: Public key distribution and coin tossing". In Proceedings of IEEE International Conference on Computers, Systems and Signal Processing, volume 175, page 8. New York, 1984.
- C. H. Bennett, 1992, "Quantum Cryptography Using Any Two Non-Orthogonal States", Phys. Rev. Lett. 68 3121;
- N. Gisin, G. Ribordy, W. Tittel and H. Zbinden, 2002, "Quantum Cryptography", Reviews of Modern Physics. 74, 145.
- P. D., Townsend, 1998, "Quantum cryptography on optical fiber networks", SPIE Conference on Photonic Quantum Computing II, SPIE vol. 3385, (Orlando, FL). (Apr. 1998), 12 pgs;
- P. D., Townsend, 1997, "Simultaneous quantum cryptographic key distribution and conventional data transmission over installed fiber using transmission over installed fiber using wavelength-division multiplexing", Electronics Letters, 33(3), 2 pgs

### SUMMARY OF THE INVENTION AND DEFINITION OF THE TECHNICAL ISSUE

In this invention it is proposed to allow a QKD customer to introduce his/her own entropy at a downstream level from the reconfigurable and programmable processing unit in his/her QKD apparatus. This is achieved by adding an RNG mixer adapted to QKD applications, in charge of mixing the output of the embedded RNGs with the at least one external RNG. This RNG mixer is located after the programmable logic, therefore avoiding any modification or intrusion in the bit values that it generates. The entropy resulting from the RNG mixer, which is a function of the entropies of the embedded RNG and the external RNG, can be equal or higher than the entropy of the external RNG if the function of mixing is chosen correctly. The adaptation of the RNG mixer to QKD applications consists in two steps: 1, sending the random bit values used for the generation or analysis of the qubits to the processing unit for the key distillation and 2, making the outputs of this RNG mixer compatible with the synchronous working of the QKD apparatus. The first step is performed by copying the random bits sent to the electronic driver and sending this copy to the processing unit. The second step is achieved by sending the clock of the QKD apparatus to the RNG mixer, and synchronizing the processing unit via a clock recovery operation made by the processing unit on the copied random bit stream. A first aspect of the invention relates to a Quantum Key Distribution apparatus, for exchanging at least one quantum key with another Quantum Key Distribution apparatus, comprising a Random Number Generator for generating a random bit signal, an electronic driver for transforming a digital signal into an analog signal, for generating a random bit signal, an electronic driver for transforming a digital signal into an analog signal, an optical platform, receiving the signal from the driver, for exchanging, through a quantum channel, said quantum key, a clock for synchronizing the working of the QKD apparatus, characterized in that said apparatus comprises an External Random Number Generator input adapted to receive an external random bit generated by an External Random Number Generator connected to said Quantum Key Distribution apparatus, a RNG mixer for receiving outputs from the Random Number Generator and the External Random Number Generator input and generating a random bit signal based on the combination of said outputs, said RNG mixer being disposed downstream the processing unit. It is therefore possible to improve the randomness/entropy of the apparatus.

Preferably, the RNG mixer comprises a Sample and Hold function for synchronizing the output of the RNG mixer with the QKD apparatus, and a combination function for applying a logical function to the two random bit signals such that the output of the mixer depends on random bit signals from both RNG inputted in the mixer. Therefore, the mixer is capable of both synchronizing and combining various signals.

Preferably, the logical function is an AND, OR, XOR or AES encryption function. Therefore, the random property, also called randomness, is even better.

Preferably, the Sample and Hold function is carried out before the combination function. Therefore, the bit streams are already synchronized when combined.

Preferably, the RNG is directly connected to the RNG mixer. Therefore, the process can be accelerated.

Preferably, the RNG is connected to a Processing unit, said processing unit receiving and storing said random bit signal in a memory, processing said random bit signal and transmitting the processed signal to the RNG mixer. Therefore, the bit stream is already synchronized when it reaches the mixer and the processing unit already knows its information.

Preferably, the RNG mixer is connected to a processing unit through an information channel so as to send a combined random bit signal copy to the processing unit. Therefore, sifting and distillation processes are easily carried out.

Preferably, the clock is connected to the RNG mixer and the information channel is further adapted to send a signal clock to the processing unit. Therefore, the processing unit and the mixer are easily synchronized.

Preferably, the apparatus comprises said External Random Number Generator. Therefore, it is easier to use.

A second aspect of the invention relates to a Quantum Key Distribution apparatus management method adapted to manage a Quantum Key Distribution apparatus of the above first aspect, comprising the steps of generating a first random bit signal in the RNG and receiving a second random bit signal through the external RNG input, generating a clock signal in a clock, sending said first and second random bits signals and said clock signal to the RNG mixer, mixing the first and second random signals so as to generate a mixed random signal synchronized by said clock signal, sending said combined random bit signal to the electronic driver, and sending a copy of the combined random bit stream to the processing unit recovering of the clock by the processing unit through the information channel.

Preferably, the mixing step comprises a sampling and holding step for sampling and holding the random number upcoming bit stream in order to synchronize properly the random bit of the external RNG with the working of the QKD apparatus and a combination step for combining the random bit streams from the external RNG and internal RNG with a predefined combination function such as exclusive OR or AES encryption function.

Preferably, the clock signal is sent to the processing unit with the copy of the combined random bit stream. Therefore, sifting and distillation processes are easily carried out.

Preferably, the first random bits signals are sent the RNG mixer through the processing unit (130). Therefore, the random bit signals are synchronized in advance.

### BRIEF DESCRIPTION OF THE DRAWINGS

Preferred embodiments of the invention are described in the following with reference to the drawings, which illustrate preferred embodiments of the invention without limiting the same. In the drawings,
Fig. 1a- Prior art Apparatus of a Quantum Key Distribution apparatus (emitter or receiver).
Fig. 1b- Prior art Method related to the management of random bits in a Quantum Key Distribution System.
Fig. 2a- Quantum Key Distribution System based on the Invention Apparatus wherein the internal RNG is connected to the Processing Unit
Fig. 2b- Quantum Key Distribution System based on the Invention Apparatus wherein the internal RNG is connected to the RNG mixer.
Fig. 3a- Method of random bit management in a Quantum Key Distribution comprising the invention Apparatus where the internal RNG is connected to the processing unit
Fig. 3b- Method of random bit management in a Quantum Key Distribution comprising the Apparatus invention and where the internal RNG is not connected to the processing unit

### DESCRIPTION OF PREFERRED EMBODIMENTS

The invention description is based on the following figures

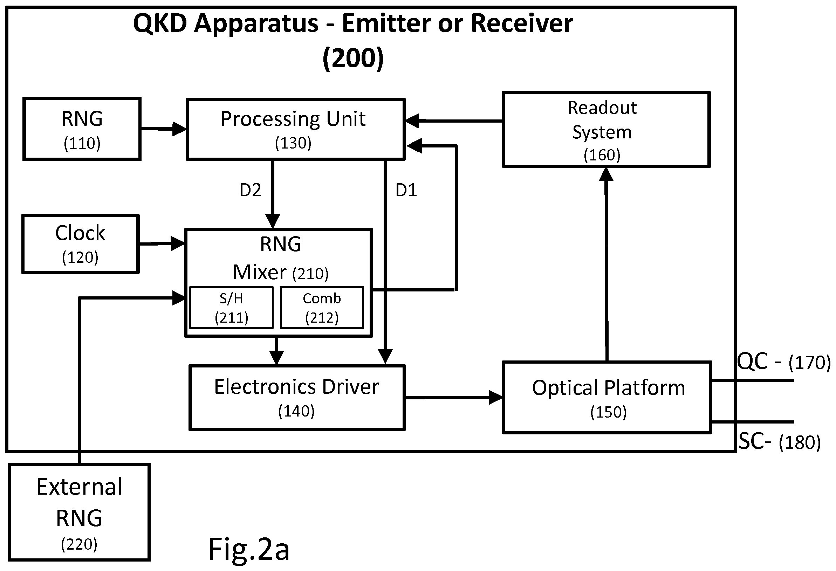

Fig. 2a represents the apparatus of the invention with its functional bocks. The apparatus of the invention consists in a QKD apparatus 200 adapted to mix the outputs of an external entropy source (i.e.: RNG) 120, which would be provided by the user of the QKD system, with the outputs of the internal RNG 110. This mix is performed downstream the programmable unit 130 regarding the flow of the random bits, in a mixer 210 that is adapted to mix those two random signals and synchronize the mixer outputs with respect to all other signals of the QKD apparatus 100. In order to obtain this, the invention apparatus is composed of two functional blocks that are added to the six blocks of the prior art QKD apparatus, an RNG mixer 210, and an external RNG input adapted to be connected to the external RNG 220. The external RNG input is the interface between the external RNG 220 and the RNG mixer 210.

As previously presented in the background section, usual QKD system apparatus exploits the random bits outputted from internal RNG 110, the clock signal generated by the clock 120 and the outputs of the readout system 160, through a processing unit 130 in order to generate two streams of bits D1 (deterministic) and D2 (random). D1 and D2 are then exploited by the Electronics driver 140 in order to control and send analog signals to the optical platform 150 which send qubit through QC 170 and realize the distillation through SC 180.

In the specific system disclosed here, the adaptation relies on the fact that an external entropy source may be added while the QKD is operating. The addition is made at a level where there is no more programmable electronics. This is done in order to give QKD customers the insurance and the guarantee that there is no failure risk in the management of the random bits generated by the internal RNG.

Therefore:
1- One needs to modify the implementation of the random bit stream management downstream to programmable processing devices of the QKD system. This is done in order to ensure that a failure of this management can only be due to failure of or hack on discrete components. These components are in general more reliable and secured than programmable devices.
2- One needs to give the possibility to the QKD user to plug an external RNG 220 which output will impact the choice of the generated qubit values or of the basis used for the qubit analysis. This may be needed in dedicated applications where the users want to use a specific entropy source compliant with its requirements.
3- An RNG mixer 210 is located between the Processing unit 130 and the Electronics driver 140 (composed of non-programmable components). The function of this RNG mixer 210 consists in combining synchronously the outputted bits from the internal RNG 110 with the outputted bits from the external RNG 220.
4- The clock device 120 is connected to the RNG mixer 210 in order to ensure the synchronization of the random bits resulting of the mix between the internal RNG and external RNG outputs.

More precisely, RNG Mixer 210 is based on Sample and Hold function 211 associated to a random bit combination function 212. The Sample and Hold function 211 aims at synchronizing the output of the RNG mixer 210 in such a way that this output can be used by the electronic driver 140. This means that the random bits generated by the mixer 210 should reach the electronic driver at the proper moment compared to all deterministic digital signals generated by the processing unit 130. Moreover, the value of these random bits should remain constant during a time period at least as long as the temporal duration of the photons carrying the qubits. E.g., if the QKD system is implemented in phase coding, the qubits are defined with a well defined phase values applied on optical pulses. These phase values must stay constant during at least the duration of each optical pulse. That's why for the proper synchronization of the RNG mixer with respect to the rest of the QKD apparatus, the RNG mixer needs a function that is able to sample its outputs at the proper time and keep this value constant for a given period of time.

As an example, this function can be made with a sample and hold component that samples a digital input signal at a time defined by a clock and holds this sampled value during a time period defined by a period of the same clock. In our invention, the Sample and Hold function 211 of the RNG mixer uses the clock of the QKD apparatus in order to synchronize the output of the mixer 210 with respect to the other signal of the apparatus that are synchronized with respect to the same reference clock. The synchronization of the Sample and Hold function 211 can be made with the clock signal itself or with a signal obtained after processing of this clock signal (e.g. the frequency of the clock 120 can be divided by two before being used for synchronization). The Hold time period can be a fixed value defined by design with e.g. a RC circuit. The combination function 212 is a logical function that mixes the two random bit signals in such a way that the output of the combiner depends on both inputs. This function can be a simple logical operation like AND, OR, or XOR (exclusive OR) operations. It can also be based on much complex cryptographic functions like encryption of one bit stream, the second bit stream being the encryption key.

Concerning the order of the two sub-functions of the RNG Mixer 210, Sample and Hold function 211 and random bit combination may be permuted. One needs to consider that the random bits coming from the internal RNG 110 are synchronized by the processing unit 130. Therefore, only the random signal coming from the external RNG, which might be asynchronous, needs to be synchronized. So, the Sample and Hold function 211 can be put at the input of the RNG mixer 210 for the external RNG 220. And then, the sampled and held signal of the external RNG 220 can be combined with the random bit stream of the internal RNG 110. Because the two inputs are synchronized, the output of the combiner 212 will be properly synchronized for the working of the QKD apparatus. On the other hand, the combination function 212 can be put first. In this case the output of the combiner 212 can be asynchronous as the external RNG 220. If this output goes through the sample and Hold function 211, it can be synchronized with respect to the QKD apparatus. Therefore, the Sample and Hold function 211 can precede or follow the combination function 212. The result of the RNG mixer 210 will be the same in both cases.

The RNG mixer 210 has three inputs, the first one is a digital input for D2 coming from the processing unit 130, the second one is a digital input for the clock signal coming from the clock 210, the last one is a digital input for the random bit stream provided by the external RNG 220. Clock 120 defines the frequency at which the synchronization of the random bits resulting from the combination (mix) the external RNG 220 output with the processing unit 130 one. The digital signals received by the RNG mixer 210 can be implemented as electronic digital signals propagating through copper wires that connect 210 to 120 (clock), to 130 (processing unit) or to 220 (external RNG).

The RNG mixer has two outputs. The first one transfers the random bits resulting from the combination of internal and external RNGs (110, 220) to the Electronics Driver 140. Then, the random bits are exploited as in any usual QKD system through the Optical platform 150 and Electronics readout 160. The second output from the RNG mixer 210 goes to the Processing Unit 130. This channel, also called information channel, is a feedback loop between the RNG mixer 210 and Processing Unit 130. The information channel enables the RNG mixer 210 to send a copy of the random bit stream resulting from the combination of external bit streams (coming from external RNG 220) and internal bit streams (coming from internal RNG 110) to the Processing Unit 130. This copy of random bit resulting from the RNG mixer 210 is used to realize the sifting of the raw key and other distillation operations. Furthermore, this connection between the RNG mixer 210 and the processing unit 130 is used to send the clock to the processing unit 130. The clock transfer can be performed by sending a clock signal similar to the one sent by the clock 120, or by using a clock recovery function on the random bit stream that is transmitted from the RNG mixer 210 to the processing unit 130. In these ways, the processing unit 130 and the RNG mixer 210 are synchronized one compare to the other. The RNG mixer 210 is the clock reference of the processing unit 130.

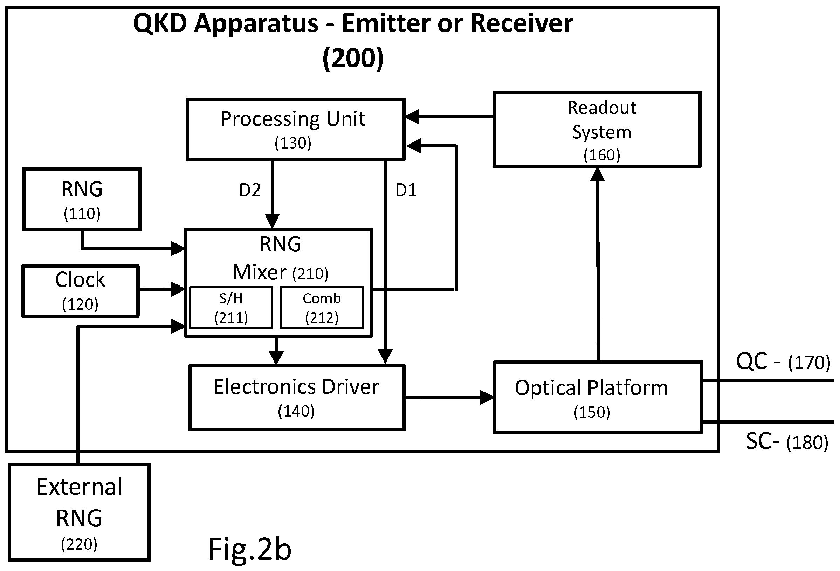

Fig. 2b- This figure represents the apparatus of the invention with its functional bocks based on figure 2a wherein the internal RNG 110 is not connected to the Processing Unit 130. Alternatively, the internal RNG 110 may be connected directly to the RNG mixer 210.

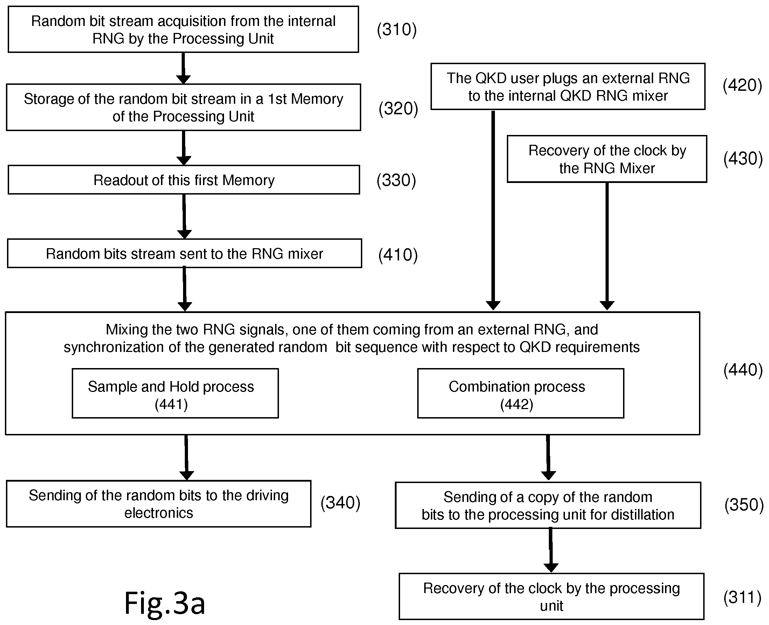

Fig 3a- is a general description of the management method 400 of the random bits used in a QKD system apparatus comprising the invention where the internal RNG 110 is connected to the processing unit 130.

In a first step 310 the random bits generated by the internal RNG 110 are acquired by the Processing Unit 130. In a second step 320, this random data bit stream is stored in a first memory of the Processing Unit 130 at the frequency F1 of the internal RNG output. In a third step 330, this first memory is read-out at a Frequency F2 that might be different from F1. This difference of writing and read-out of the memory allows one to adapt the throughput of the internal RNG 110 to the working frequency of the QKD apparatus 200. In a fourth step 410, the random bits generated by the internal RNG 110 are sent to the RNG mixer 210. In parallel to these fourth steps, two steps are performed step 420 and step 430. In step 420, a user may plug an external RNG 220 to the RNG mixer 210. In step 430, the RNG mixer 210 acquires the clock signal sent by the clock 120. This clock will be used for the synchronization of the sample and hold function 211. In a step 440, random bits streams coming from internal RNG 110 and external RNG 220 are mixed and synchronized with respect to the QKD apparatus working through two sub steps consisting in:
- Step 441: Sampling and holding the random number upcoming bit stream in order to synchronize properly (time of sampling and duration during which the value is kept constant) the random bit of the external RNG with the working of the QKD apparatus 200.
- Step 442: Combine the random bit streams from the external RNG 220 and internal RNG 110 with a predefined combination function such as exclusive OR or AES function.

Step 440 is followed by two series of steps realized in parallel. On one hand, in step 340, the random bit stream resulting from the RNG mixer 210 is sent to the Electronics driver 140. On the other hand, in step 350, a copy of the random bit stream, resulting from the RNG mixer 210 and sent to the Electronics driver 140 is sent to the processing unit 130 for distillation in a step 350. Consecutively, in step 311, the clock is recovered by the Processing Unit 130 during the acquisition of the random bit stream.

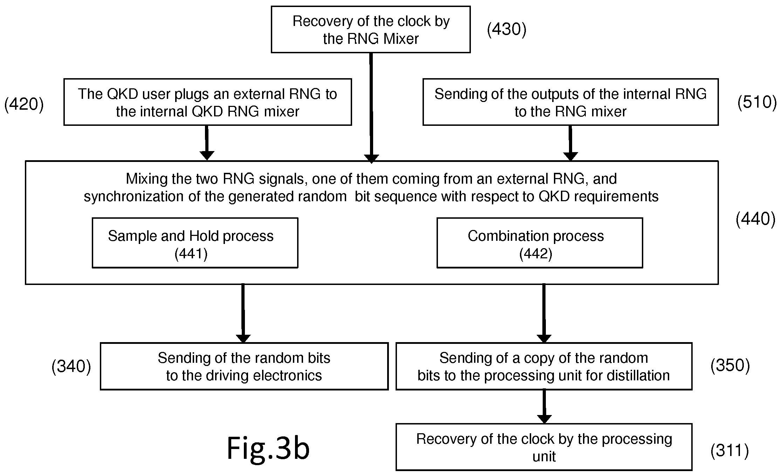

Fig 3b- is a specific description of the management method 500 for the random bits used in a QKD system apparatus comprising the invention as described in Fig. 2b. In that case, the internal RNG 110 is not connected to the processing unit 130.If the internal RNG 110 is not connected to the processing unit 130; the alternative case is that internal RNG 110 is directly connected to the RNG mixer 210. The following paragraph aims at describing the method 500 associated to this specific set-up. In this case, the main change with respect to the previous method 400 is that the steps 310, 320, 330 and 410 are replaced by the step 510. In step 510, the outputs of the internal RNG are sent to the RNG mixer 210. In parallel to this step, there are still steps 420 and 430. In step 420, the user plugs an external entropy source (RNG) 220 to the internal RNG mixer 210. In step 430, the RNG mixer 210 recovers the clock signal from the clock 120. Then, as in method 400, there is the step 440 where the two RNG signals are combined and synchronized with respect to the QKD apparatus working. Step 440 is still composed of the same sub-steps 441 and 442. The only difference in step 440 in method 500 compared to step 440 in method 400 is that because the internal RNG might be asynchronous compared to the QKD apparatus, its output needs to be synchronized as the one of the external RNG. So, if the sample and hold function 411 comes before the combination function 412, function 411 has to be applied to the random bit stream coming from the external RNG 220 and the internal one 110. If the combination function 412 comes first, the sample and hold function 411 is performed only once on the result of the combiner 412. Step 440 is followed by two series of steps realized in parallel as in method 400. On one hand, in step 340, the random bit stream resulting from the RNG mixer 210 is sent to the Electronics driver 140. On the other hand, in step 350, a copy of the random bit stream, resulting from the RNG mixer 210 and sent to the Electronics driver 140 is sent to the processing unit 130 for distillation in a step 350. Consecutively, in step 311, the clock is recovered by the Processing Unit 130 during the acquisition of the random bit stream.

## Claims

1. Quantum Key Distribution apparatus (200), for exchanging at least one quantum key with another Quantum Key Distribution apparatus, comprising:
a Random Number Generator (110) for generating a random bit signal,
an electronic driver (140) for transforming a digital signal into an analog signal,
an optical platform (150), receiving the signal from the driver, for exchanging, through a quantum channel (170), said quantum key,
a clock (120) for emitting a clock signal,
**characterized in that** said apparatus comprises
an External Random Number Generator input adapted to receive an external random bit generated by an External Random Number Generator (220) connected to said Quantum Key Distribution apparatus,
a processing unit (130) which is programmable and reconfigurable,
a RNG mixer (210) for receiving outputs from the Random Number Generator and the External Random Number Generator input and generating a random bit signal based on the combination of said outputs, said RNG mixer being disposed downstream the processing unit (130),
wherein said RNG mixer comprises:
a Sample and Hold function (211) for synchronizing the output of the RNG mixer (210) with the QKD apparatus (200), said Sample and Hold function (211) synchronization being made with said clock signal, and
a combination function (212) for applying a logical function to the two random bit signals such that the output of the mixer depends on random bit signals from both RNG (110, 220) inputted in the mixer.

2. Quantum Key Distribution apparatus of claim 1, wherein the logical function is an AND, OR, XOR or AES encryption function.

3. Quantum Key Distribution apparatus of claims 1 or 2, wherein the Sample and Hold function (211) is carried out before the combination function (212).

4. Quantum Key Distribution apparatus of claim 1, wherein the RNG (110) is directly connected to the RNG mixer (210).

5. Quantum Key Distribution apparatus of claims 1 to 3, wherein the RNG (110) is connected to the Processing unit (130), said processing unit receiving and storing said random bit signal in a memory, processing said random bit signal and transmitting the processed signal to the RNG mixer (210).

6. Quantum Key Distribution apparatus of claim 1-5, wherein the RNG mixer (210) is connected to a processing unit (130) through an information channel so as to send a combined random bit signal copy to the processing unit.

7. Quantum Key Distribution apparatus of claim 6, wherein the clock (120) is connected to the RNG mixer (210) and the information channel is further adapted to send a signal clock to the processing unit (130).

8. Quantum Key Distribution apparatus of claims 1-7, wherein said apparatus comprises said External Random Number Generator (220).

9. Quantum Key Distribution apparatus management method adapted to manage a Quantum Key Distribution apparatus of claims 1-8, comprising the steps of:
- generating a first random bit signal in the RNG (110) and receiving a second random bit signal through the external RNG input,
- generating a clock signal in a clock,
- sending said first and second random bits signals and said clock signal to the RNG mixer (210)
- mixing, in a RNG mixer, the first and second random signals so as to generate a mixed random signal based on the combination of said first and second random signals, said mixing step comprising
- a Sample and Hold function applying step for synchronizing the output of the RNG mixer (210) with the QKD apparatus (200), said Sample and Hold function (211) synchronization being made with said clock signal, and
- a combination function applying step for applying a logical function to the two random bit signals such that the output of the RNG mixer depends on random bit signals from both RNG (110, 220) inputted in the mixer - sending said combined random bit signal to the electronic driver, and
- sending a copy of the combined random bit stream to the processing unit.
- recovering of the clock by the processing unit through the information channel.

10. Quantum Key Distribution apparatus management method according to claim 9, wherein said mixing step comprises a sampling and holding step for sampling and holding the random number upcoming bit stream in order to synchronize properly the random bit of the external RNG (220) with the working of the QKD apparatus and a combination step for combining the random bit streams from the external RNG (220) and internal RNG (110) with a predefined combination function such as exclusive OR or AES encryption function.

11. Quantum Key Distribution apparatus management method according to claim 9 or 10, wherein the clock signal is sent to the processing unit (130) with the copy of the combined random bit stream.

12. Quantum Key Distribution apparatus management method according to claim 9 to 11, wherein said first random bits signals are sent the RNG mixer through the processing unit (130)

## Patentansprüche

1. Quantenschlüsselverteilungsvorrichtung (QSV) (200), zum Austauschen zumindest eines Quantenschlüssels mit einer weiteren Quantenschlüsselverteilungsvorrichtung, umfassend:
einen Zufallszahlengenerator (ZZG) (110) zum Erzeugen eines Zufallsbitsignals,
eine elektronische Treiberschaltung (140) zum Umwandeln eines digitalen Signals in ein analoges Signal,
eine optische Plattform (150), die das Signal von der Treiberschaltung empfängt, zum Austauschen des Quantenschlüssels über einen Quantenkanal (170),
einen Taktgeber (120) zum Aussenden eines Taktgebersignals,
**dadurch gekennzeichnet, dass** die Vorrichtung umfasst:
einen externen Zufallszahlengenerator-Eingang, der dazu geeignet ist, ein externes Zufallsbit zu empfangen, das durch einen externen Zufallszahlengenerator (220) erzeugt wird, der mit der Quantenschlüsselverteilungsvorrichtung verbunden ist,
eine Verarbeitungseinheit (130), die programmierbar und rekonfigurierbar ist,
einen ZZG-Mischer (210) zum Empfangen von Ausgängen von dem Zufallszahlengenerator und dem externen Zufallszahlengenerator-Eingang und zum Erzeugen eines Zufallsbitsignals auf Grundlage der Kombination der Ausgänge,
wobei der ZZG-Mischer stromabwärts der Verarbeitungseinheit (130) angeordnet ist,
wobei der ZZG-Mischer umfasst:
eine Abtast-Halte-Funktion (211) zum Synchronisieren des Ausgangs des ZZG-Mischers (210) mit der QSV-Vorrichtung (200), wobei die Synchronisation durch die Abtast-Halte-Funktion (211) mit dem Taktgebersignal erfolgt, und
eine Kombinationsfunktion (212) zum Anwenden einer logischen Funktion auf die zwei Zufallsbitsignale, so dass der Ausgang des Mischers von Zufallsbitsignalen von beiden ZZGs (110, 220) abhängig ist, die in den Mischer eingehen.

2. Quantenschlüsselverteilungsvorrichtung nach Anspruch 1, wobei die logische Funktion eine AND-, OR-, XOR- oder AES-Verschlüsselungsfunktion ist.

3. Quantenschlüsselverteilungsvorrichtung of Ansprüche 1 oder 2, wobei die Abtast-Halte-Funktion (211) vor der Kombinationsfunktion (212) ausgeführt wird.

4. Quantenschlüsselverteilungsvorrichtung nach Anspruch 1, wobei der ZZG (110) direkt mit dem ZZG-Mischer (210) verbunden ist.

5. Quantenschlüsselverteilungsvorrichtung nach den Ansprüchen 1 bis 3, wobei der ZZG (110) mit der Verarbeitungseinheit (130) verbunden ist, wobei die Verarbeitungseinheit das Zufallsbitsignal empfängt und in einem Speicher speichert, das Zufallsbitsignal verarbeitet und das verarbeitete Signal an den ZZG-Mischer (210) überträgt.

6. Quantenschlüsselverteilungsvorrichtung nach Anspruch 1 bis 5, wobei der ZZG-Mischer (210) mit einer Verarbeitungseinheit (130) durch einen Informationskanal verbunden ist, um eine Kopie des kombinierten Zufallsbitsignals an die Verarbeitungseinheit zu senden.

7. Quantenschlüsselverteilungsvorrichtung nach Anspruch 6, wobei der Taktgeber (120) mit dem ZZG-Mischer (210) verbunden ist, und der Informationskanal ferner dazu geeignet ist, ein Taktgebersignal an die Verarbeitungseinheit (130) zu senden.

8. Quantenschlüsselverteilungsvorrichtung nach den Ansprüchen 1 bis 7, wobei die Vorrichtung den externen Zufallszahlengenerator (220) umfasst.

9. Verfahren zur Verwaltung einer Quantenschlüsselverteilungsvorrichtung, das dazu geeignet ist, eine Quantenschlüsselverteilungsvorrichtung nach den Ansprüchen 1 bis 8 zu verwalten, umfassend die folgenden Schritte:
- Erzeugen eines ersten Zufallsbitsignals in der ZZG (110) und Empfangen eines zweiten Zufallsbitsignals durch den externen ZZG-Eingang,
- Erzeugen eines Taktgebersignals in einem Taktgeber,
- Senden des ersten und zweiten Zufallsbitsignals und des Taktgebersignals an den ZZG-Mischer (210),
- Mischen des ersten und zweiten Zufallssignals in einem ZZG-Mischer, um ein gemischtes Zufallssignal auf Grundlage der Kombination des ersten und zweiten Zufallssignals zu erzeugen, wobei der Schritt des Mischens umfasst:
- einen Schritt zur Anwendung einer Abtast-Halte-Funktion zum Synchronisieren des Ausgangs des ZZG-Mischers (210) mit der QSV-Vorrichtung (200), wobei die Synchronisation durch die Abtast-Halte-Funktion (211) mit dem Taktgebersignal erfolgt, und
- einen Schritt zur Anwendung einer Kombinationsfunktion zum Anwenden einer logischen Funktion auf die zwei Zufallsbitsignale, so dass der Ausgang des ZZG-Mischers von Zufallsbitsignalen von beiden ZZGs (110, 220) abhängig ist, die in den Mischer eingehen,
- Senden des kombinierten Zufallsbitsignals an die elektronische Treiberschaltung, und
- Senden einer Kopie des kombinierten Zufallsbitstroms an die Verarbeitungseinheit.
- Wiedergewinnen des Takts durch die Verarbeitungseinheit über den Informationskanal.

10. Verfahren zur Verwaltung der Quantenschlüsselverteilungsvorrichtung nach Anspruch 9, wobei der Schritt des Mischens einen Abtast- und Halteschritt zum Abtasten und Halten des eingehenden Zufallszahlen-Bitstroms, um das Zufallsbit des externen ZZG (220) korrekt mit der Arbeit der QSV-Vorrichtung zu synchronisieren, und einen Kombinationsschritt zum Kombinieren der Zufallsbitströme von dem externen ZZG (220) und dem internen ZZG (110) mit einer vorbestimmten Kombinationsfunktion, etwa einer XOR- oder AES-Verschlüsselungsfunktion, umfasst.

11. Verfahren zur Verwaltung der Quantenschlüsselverteilungsvorrichtung nach Anspruch 9 oder 10, wobei das Taktgebersignal an die Verarbeitungseinheit (130) mit der Kopie des kombinierten Zufallsbit-Stroms gesendet wird.

12. Verfahren zur Verwaltung der Quantenschlüsselverteilungsvorrichtung nach Anspruch 9 bis 11, wobei die ersten Zufallsbitsignale an den ZZG-Mischer durch die Verarbeitungseinheit (130) gesendet werden.

## Revendications

1. Appareil de Distribution de Clé Quantique (200), pour échanger au moins une clé quantique avec un autre appareil de Distribution de Clé Quantique, comprenant :
un Générateur de Nombres Aléatoires (110) pour générer un signal binaire aléatoire,
un circuit d'attaque électronique (140) pour transformer un signal numérique en un signal analogique,
une plate-forme optique (150), recevant le signal à partir du circuit d'attaque, pour échanger, à travers un canal quantique (170), ladite clé quantique,
une horloge (120) pour émettre un signal d'horloge,
**caractérisé en ce que** ledit appareil comprend
une entrée de Générateur de Nombres Aléatoires Externe adaptée pour recevoir un bit aléatoire externe généré par un Générateur de Nombres Aléatoires Externe (220) connecté audit appareil de Distribution de Clé Quantique,
une unité de traitement (130) qui est programmable et reconfigurable,
un mélangeur RNG (210) pour recevoir des sorties à partir du Générateur de Nombres Aléatoires et de l'entrée de Générateur de Nombres Aléatoires Externe et générer un signal binaire aléatoire sur la base de la combinaison desdites sorties, ledit mélangeur RNG étant disposé en aval de l'unité de traitement (130),
dans lequel ledit mélangeur RNG comprend :
une fonction d'Échantillonnage-Blocage (211) pour synchroniser la sortie du mélangeur RNG (210) avec l'appareil QKD (200), ladite synchronisation de la fonction d'Échantillonnage-Blocage (211) étant réalisée avec ledit signal d'horloge, et
une fonction de combinaison (212) pour appliquer une fonction logique aux deux signaux binaires aléatoires de sorte que la sortie du mélangeur dépende des signaux binaires aléatoires provenant des deux RNG (110, 220) entrés dans le mélangeur.

2. Appareil de Distribution de Clé Quantique de la revendication 1, dans lequel la fonction logique est une fonction de cryptage AES, ET, OU ou OU exclusif.

3. Appareil de Distribution de Clé Quantique de la revendication 1 ou 2, dans lequel la fonction d'Échantillonnage-Blocage (211) est effectuée avant la fonction de combinaison (212).

4. Appareil de Distribution de Clé Quantique de la revendication 1, dans lequel le RNG (110) est directement connecté au mélangeur RNG (210).

5. Appareil de Distribution de Clé Quantique des revendications 1 à 3, dans lequel le RNG (110) est connecté à l'unité de traitement (130), ladite unité de traitement recevant et stockant ledit signal binaire aléatoire dans une mémoire, traitant ledit signal binaire aléatoire et transmettant le signal traité au mélangeur RNG (210).

6. Appareil de Distribution de Clé Quantique des revendications 1 à 5, dans lequel le mélangeur RNG (210) est connecté à une unité de traitement (130) à travers un canal d'informations de manière à envoyer une copie de signal binaire aléatoire combiné à l'unité de traitement.

7. Appareil de Distribution de Clé Quantique de la revendication 6, dans lequel l'horloge (120) est connectée au mélangeur RNG (210) et le canal d'informations est en outre adapté pour envoyer un signal d'horloge à l'unité de traitement (130).

8. Appareil de Distribution de Clé Quantique des revendications 1 à 7, dans lequel ledit appareil comprend ledit Générateur de Nombres Aléatoires Externe (220).

9. Procédé de gestion d'appareil de Distribution de Clé Quantique adapté pour gérer un appareil de Distribution de Clé Quantique des revendications 1 à 8, comprenant les étapes consistant :
- à générer un premier signal binaire aléatoire dans le RNG (110) et à recevoir un deuxième signal binaire aléatoire à travers l'entrée de RNG externe,
- à générer un signal d'horloge dans une horloge,
- à envoyer lesdits premier et deuxième signaux binaires aléatoires et ledit signal d'horloge au mélangeur RNG (210),
- à mélanger, dans un mélangeur RNG, les premier et deuxième signaux aléatoires de manière à générer un signal aléatoire mixte sur la base de la combinaison desdits premier et deuxième signaux aléatoires, ladite étape de mélange comprenant
- une étape d'application de fonction d'Échantillonnage-Blocage pour synchroniser la sortie du mélangeur RNG (210) avec l'appareil QKD (200), ladite synchronisation de la fonction d'Échantillonnage-Blocage (211) étant réalisée avec ledit signal d'horloge, et
- une étape d'application de fonction de combinaison pour appliquer une fonction logique aux deux signaux binaires aléatoires de sorte que la sortie du mélangeur RNG dépende des signaux binaires aléatoires provenant des deux RNG (110, 220) entrés dans le mélangeur,
- à envoyer ledit signal binaire aléatoire combiné au circuit d'attaque électronique, et
- à envoyer une copie du train de bits aléatoires combiné à l'unité de traitement,
- à récupérer l'horloge par l'unité de traitement à travers le canal d'informations.

10. Procédé de gestion d'appareil de Distribution de Clé Quantique selon la revendication 9, dans lequel ladite étape de mélange comprend une étape d'échantillonnage-Blocage pour échantillonner et bloquer le train de bits à venir de nombres aléatoires afin de synchroniser correctement le bit aléatoire du RNG externe (220) avec le fonctionnement de l'appareil QKD et une étape de combinaison pour combiner les trains de bits aléatoires provenant du RNG externe (220) et du RNG interne (110) avec une fonction de combinaison prédéfinie telle que la fonction de cryptage AES ou OU exclusif.

11. Procédé de gestion d'appareil de Distribution de Clé Quantique selon la revendication 9 ou 10, dans lequel le signal d'horloge est envoyé à l'unité de traitement (130) avec la copie du train de bits aléatoires combiné.

12. Procédé de gestion d'appareil de Distribution de Clé Quantique selon les revendications 9 à 11, dans lequel lesdits premiers signaux binaires aléatoires sont envoyés au mélangeur RNG à travers l'unité de traitement (130).
